# EUROPEAN PATENT APPLICATION

(11) **EP 1 253 760 A1**
(43) Date of publication of application: **30.10.2002**
(21) Application number: 01201460.1
(22) Date of filing: 23.04.2001
(51) Int. Cl.: H04L 29/06

(54) **Service provider architecture for delivering services to mobile communication customers**

(71) Applicant: Koninklijke KPN N.V., 9726 AE Groningen (NL)
(72) Inventor: Oortmarssen, Hans Frederik, 2545 WK Den Haag (NL); Odijk, Jacobus Johannes Maria, 1829 EB Alkmaar NH (NL); Ten Hoopen, Jan, 2547 XP Den Haag (NL); Enschede, Marc, 9403 ZP Assen (NL); Schipper, Bart Pieter Nicolaas, 1018 CS Amsterdam (NL); Snikkers, Frederik Willem, 2264 JJ Leidschendam (NL)
(74) Representative: Wuyts, Koenraad Maria

(57) **Abstract**

The present invention is related to a method for providing content services to a mobile communications customer, comprising the following steps:
receiving a customer request for a content service and transferring it to a content provider, and delivering said content service to a service mediator, characterised in that said service mediator performs the following steps:
   allowing or refusing of the transaction based on the customer's billing data, in case of allowance, providing said content service to the customer, and billing said customer for the content.

The invention is further related to a service provider system for providing content services to a mobile communications customer, said system comprising: a telecom services provider system, a content provider system, and a service mediator, characterised in that said service mediator is arranged to receive said content from said content provider, allow or refuse the transaction based on the customer's billing data, in case of allowance, provide said content service to the customer, and bill said customer for the content.

## Description

### Field of the invention

The present invention is related to billing systems for billing customers, in particular prepay customers for telecom services.

### State of the art

With the existing emerging new services such as Hi site SMS, GIN (GSM Information Network), 3M (WAP), CNN services and m-commerce, all accessed using cellular phones, billing of services becomes more and more complex. Further, some services are only available to so-called postpaid customers, i.e. subscription customers, and tariffs for a specific service may be subscription-specific (e.g. free for high-end subscribers, paying for low-end subscribers). This usually leads to development of a different architecture per service to cope with these differences, as the content provider usually is not aware of the customer's privileges.

New ways of paying for products and services are currently being introduced, known as m-commerce. Products include for example drinks obtainable from a distributor in a public place, while services can be e.g. parking space or movie tickets. Also so-called mobile banking will be available soon. These systems rely on an m-commerce account, which can be used to pay for products and/or services by using a cellular phone.

### Problem Definition and aim of the invention

Currently, there is no available architecture that can handle all these services, and there is no architecture available that enables all these services in a transparent way for post- and prepaid customers. Also, it is important for a customer to have a clear picture of the cost of the content services alone, thus separate from the communication costs that are always billed by the telecom provider.

The present invention aims to provide a service provider architecture that realises payments and billing of content provided to a customer, independent on the customer (postpaid or prepaid), the platform or the content itself.

### Summary of the invention

In an aspect of the present invention, a service provider system for providing content services to a mobile communications customer is disclosed, said system comprising:
- A telecom services provider system
- A content provider system, and
- A service mediator,
and wherein said service mediator is arranged to
- Receive said content from said content provider,
- allow or refuse the transaction to the customer based on the customer's billing data,
- In case of allowance, provide said content service to the customer, and optionally
- Bill said customer for the content.

The content service can be any kind of existing or future service that can be obtained with a mobile telephone. This includes SMS, Hi Time SMS, GIN, 3M, CNN, banking services, credit services, on-site payment for services (e.g. parking lot) or products (e.g. drinks dispenser). The service provider system of the invention can be used for any mobile communications technology such as UMTS, GSM, WAP, GPRS, SGPP or any future mobile communications technology, and making use of any protocol such as XML or mobile html or other protocols.

Preferably, the system of the present invention is at least partly implemented on a computer environment.

The service provider system of the present invention can be further arranged in that said service mediator comprises a payment/billing server arranged to perform validation of the customer's request and payment and/or billing for the content service. This payment/billing server is preferably a database, comprising customer data such as type of customer (postpaid or prepaid), m-commerce accounts, billing information (for postpaid customers) and prepaid account information (for prepaid customers).

In a second aspect of the present invention, a method for providing content services to a mobile communications customer is disclosed, said method comprising the following steps:
- receiving a customer request for a content service by a content provider, optionally comprising the step of receiving the customer request for the content service by a mediator and transferring it to the content provider,
- delivering said content service to a service mediator, the service mediator optionally being the same as said mediator,
wherein said service mediator performs the following steps:
- allowing or refusing of the transaction to the customer based on the customer's billing data,
- In case of allowance, providing said content service to the customer, and optionally
- Billing said customer for the content.

The method can be further characterised in that the customer's billing data comprises data about the type of customer (prepaid or postpaid), data about the account of said customer, and optionally data about the m-commerce account of said customer.

In case the customer is a prepaid customer, said step of billing said customer can comprise withdrawal of the required sum from the customer's account.

The customer can also be a postpaid customer. The method of the present invention can be further characterised in that said step of billing said customer comprises withdrawal of the required sum from an m-commerce account.

In a preferred embodiment, the method further comprises the step of billing the customer for the transport of the content.

### Short description of the drawings

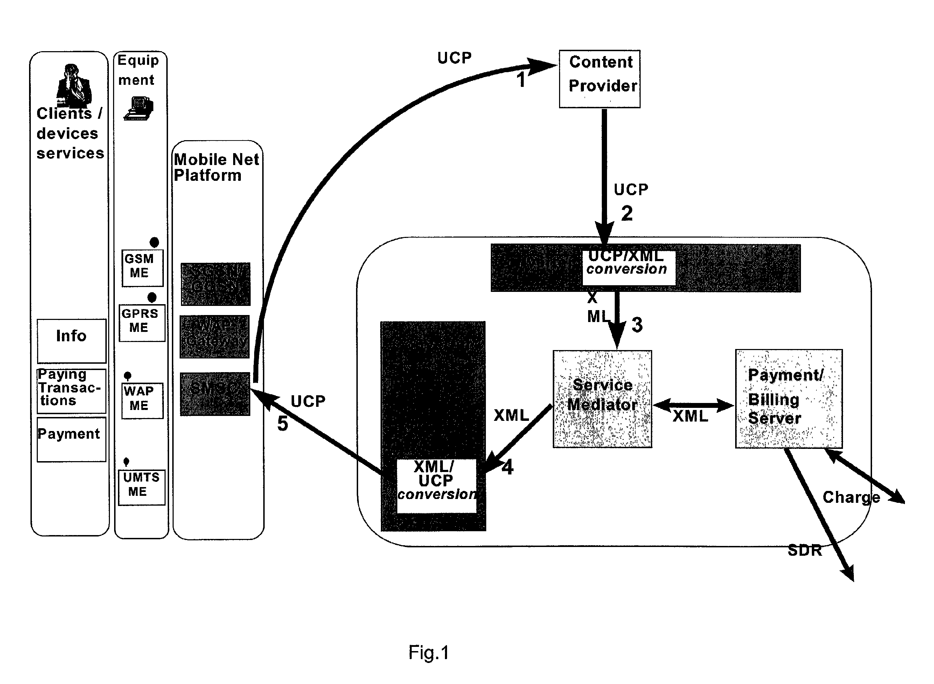

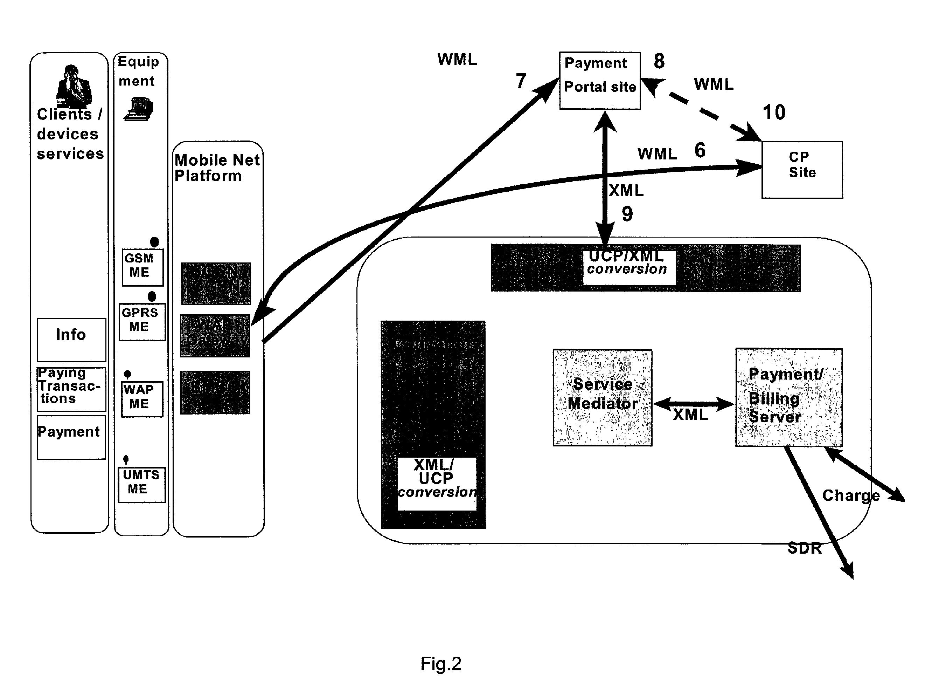

Fig. 1 and 2 represent an example of a system according to the present invention and illustrate the method of the invention.

### Detailed description of the invention

The present invention will be illustrated using non-limiting examples and figures

### Example 1: content billing of SMS via UCP

Figure 1 describes the method of the present invention in the specific case of SMS billing. A customer sends in a request for a content service, in this case an SMS message (1). This message as sent by the telecom service provider to a content provider. This content provider reacts to the message by sending the desired content to the service mediator (2). The service mediator will check whether the customer is entitled to the content service. If allowable, the content is sent to the customer (4,5). The Payment/Billing server takes care of charging the customer's prepaid account, or sends an SDR (Service Detail Record) to the Telecom Service Provider's billing services to include the content service on the next bill for the postpaid customer. It is preferable to include the convertors into the service mediator module, as this allows for a unified standard language within the service mediator/payment/billing server module, and is also useful to deal with requests in different languages, as these requests will be translated by the conventors.

### Example 2: content billing of SMS via UCP

Figure 2 describes the method of the present invention in the specific case of WAP services. Here again the request for a content service, a WAP request in this case, is sent to a content provider's site (CP Site) (6). These requests are direct and the customer can select the information he needs by browsing the site of the content provider, or change content provider when he does not find the information he needs. A request for a paying content service will transfer the customer to a payment portal site (7). The payment portal site receives data from the content provider (e.g. amount, transaction identification number and content-provider code)(8). The customer will be authenticated at the payment portal site and is requested to confirm the payment. When the customer agrees, the payment/billing server will be queried to check whether the customer is entitled to the service (9). If the answer is affirmative, the payment will be effected as described higher and the content provider will receive a confirmation of the payment (5). The customer will be redirected to the content provider's site to receive the requested content services.

It is clear that the method and the system of the present invention can be easily adapted to other content services than those illustrated by the figures and examples. More particularly SMS, Hi Time SMS, GIN, UMTS, 3M, CNN, banking services, credit services, on-site payment for services (e.g. parking lot) or products (e.g. drinks dispenser), ... are easily implementable using a singel architecture. Also m-commerce accounts can be charged using the method of the invention, internal accounts (i.e. accounts that reside at the Telecom Service Provider) as well as external accounts (e.g. credit card companies).

The Service Mediator has as a primary goal to deal with providing the content service to the customer and with the payment issues. The Payment/billing server allows to query customer data and effectuates the payment.

Preferably, the telecom transport costs for providing the service are billed separately. This can easily be implemented using a tariffing server. This is necessary because not all traffic generated by the content request will be normal traffic, billable by the telecom service provider but can be e.g. internet traffic.

## Claims

1. A service mediator system implementable on a computer environment and being arranged for receiving via mobile communication technique content from a content provider and being addressed to a cumstomer, for verifying the customer's billing data, and for forwarding or refusing a transaction of the content to the customer based on the customer's billing data.

2. A service provider system for providing content services to a mobile communications customer, said system comprising:
• A telecom services provider system
• A content provider system, and
• A service mediator,
wherein said service mediator is arranged to
• Receive said content from said content provider,
• allow or refuse the transaction based on the customer's billing data,
• In case of allowance, provide said content service to the customer.

3. The service provider system as recited in claim 2 wherein the service mediator is further arranged to bill said customer for the content.

4. Service provider system as in claim 2, **characterised in that** the system is at least partly implemented on a computer environment.

5. Service provider system as in any of the claims 2-4, **characterised in that** said service mediator comprises a payment/billing server arranged to perform validation of the customer's request and payment and/or billing for the content service.

6. Method for providing content services to a mobile communications customer, comprising the following steps:
• receiving a customer request for a content service by a content provider,
• delivering said content service to a service mediator,
and wherein said service mediator performs the following steps:
• allowing or refusing of the transaction based on the customer's billing data,
• In case of allowance, providing said content service to the customer, and optionally
• Billing said customer for the content.

7. Method as in claim 6, further **characterised in that** the customer's billing data comprises data about the type of customer (prepaid or postpaid), data about the account of said customer, and optionally data about the m-commerce account of said customer.

8. Method as in claim 6 or 7 **characterised in that** the customer is a prepaid customer.

9. Method as in claim 8, **characterised in that** said step of billing said customer comprises withdrawal of the required sum from the customer's account.

10. Method as in claim 6 or 7 **characterised in that** the customer is a postpaid customer.

11. Method as in any of claims 6-10, **characterised in that** said step of billing said customer comprises withdrawal of the required sum from an m-commerce account.

12. Method as in any of claims 6-11, further comprising the step of billing the customer for the transport of the content.
